# EUROPEAN PATENT SPECIFICATION

(11) **EP 2 082 018 B1**
(45) Date of publication and mention of the grant of the patent: **07.05.2014**
(21) Application number: 07839899.7
(22) Date of filing: 01.11.2007
(51) Int. Cl.: C11D 3/00, C11D 1/34, C11D 3/36, C11D 3/395, C23F 11/167, A01N 59/00, C11D 7/36

(54) **CORROSION INHIBITOR SYSTEM FOR MILDLY ACIDIC TO PH NEUTRAL HALOGEN BLEACH-CONTAINING CLEANING COMPOSITIONS**
KORROSIONSSCHUTZSYSTEM FÜR LEICHT SAURE BIS PH-NEUTRALE HALOGENBLEICHMITTELHALTIGE REINIGUNGSMITTEL
SYSTÈME ANTICORROSION POUR COMPOSITIONS DE NETTOYAGE CONTENANT UN AGENT DE BLANCHIMENT HALOGÈNE ET D'UN PH LÉGÈREMENT ACIDE À NEUTRE

(30) Priority: 03.11.2006 US 556313
(43) Date of publication of application: 29.07.2009
(73) Proprietor: S.C. Johnson & Son, Inc., Racine, WI 53403 (US)
(72) Inventor: REES, Wayne M., Racine, WI 53406 (US)
(74) Representative: Ruschke, Hans Edvard
(86) International application number: PCT/US2007/023066
(87) International publication number: WO 2008/057380

(56) References cited:
- EP-A- 0 009 247
- WO-A-2005/019117
- US-A- 4 528 110
- US-A- 6 162 371
- US-B1- 6 471 974

## Description

### FIELD OF INVENTION

The invention is directed to corrosion inhibitor systems for mildly acidic to pH neutral aqueous cleaner compositions containing an active halogen-based bleaching system. The corrosion inhibitor system includes at least an alkyl phosphonate compound.

### BACKGROUND OF THE INVENTION

Cleaning compositions can be corrosive to metal surfaces on which they are applied, as well as corrosive to packaging components which hold and/or dispense the cleaning compositions, and industrial equipment used to manufacture such cleaning compositions. Composition corrosivity is especially relevent for household cleaning products which in use have extended residence times on surfaces to which they are applied. An example of this type of household cleaning product is that of a daily shower/bathtub cleaner, where the product is applied as an aqueous liquid surface treatment, and left to dry on the applied surface without rinsing. Generally, this type of product may reside on the treated surface for several hours or days before being rinsed off the surface during subsequent showers/baths. Since shower and bathtub enclosures are generally constructed with metal fixtures (e.g. faucets, spigots, drains, sliding doors, plumbing pipes, etc.), it is desirable to avoid corrosion of these metallic surfaces by the household cleaner through the use of appropriate cleaner formulation chemistry, such as the inclusion of effective corrosion inhibiting compounds in the product.

While the inclusion of halogen-based oxidizing agents in a household cleaner may be desirable from the standpoint of achieving superior product cleaning (bleaching) and biocidal performance, such products may cause undesirable corrosion of many metallic household surfaces. This is especially true for "soft" metal surfaces, such as aluminum, brass, and copper, which can be commonly found in residential households. Thus, there exists a need for effective corrosion inhibitor systems for household cleaners which contain halogen-based oxidizing (bleaching) agents. It is also highly desirable that these corrosion inhibitor systems exhibit acceptable chemical compatibility with the halogen-based oxidizing agent, when formulated in cleaner compositions containing both a corrosion inhibitor and halogen-based oxidizing agent.

Halogen-based oxidizing (bleaching) agents are available as many different distinct chemical compounds, some of which are commonly employed in cleaning compositions. However, very few halogen-based oxidants are long-term stable when formulated in homogeneous aqueous solutions (i.e., the oxidizer content does not substantially degrade at ambient conditions over a long period of time, such as many months). While highly alkaline aqueous solutions of inorganic hypochlorite salts are long term stable, they are also extremely reactive, and chemically destructive/corrosive to surfaces on which they are applied. In addition, these solutions tend to evolve unpleasant and hazardous chlorine-containing fumes when the solutions are allowed to dry down on applied surfaces for a prolonged period without rinsing. Such alkaline hypochlorite solutions are widely recognized as irritating and somewhat hazardous by their users, especially in household (residential) environments which generally have easily damaged surfaces, poor ventilation control, and low levels of user personal protection. In contrast, "stabilized hypochlorite solutions", i.e., mildly acidic to pH neutral aqueous solutions of N-chlorosulfamate salts as described in U.S. Patent Nos. 6,162,371 and 6,471,974, are long-term stable, less chemically reactive, and present substantially less of a hazard to surfaces and users. These stabilized hypochlorite solutions, in addition to being less aggressive to surfaces and human tissues than alkaline hypochlorite solutions, also do not evolve unpleasant/hazardous chlorine fumes when allowed to dry down on surfaces. Thus, it is highly desirable to employ a stabilized hypochlorite-containing cleaning composition for applications where the cleaner is applied as a surface treatment and allowed to dry down without rinsing, when a high level of both cleaning efficacy and safety is sought.

Various organo-phosphonate compounds are used in corrosion inhibition applications. For example, numerous functionalized alkyl phosphonate compounds are sold by Solutia, Inc. (St. Louis, MO USA) under the name DEQUEST®, for many applications, including corrosion inhibition. Two such compounds indicated by Solutia, Inc. for use in aqueous solutions which contain active chlorine oxidants are DEQUEST® 2010 (1-hydroxyethylidene-1,1-phosphonic acid) and DEQUEST® 7000 (2-phosphonobutane-1,2,4-tricarboxylic acid), as well as their neutralized salts. However, Solutia, Inc. notes that these materials are slowly degraded in the presence of active chlorine compounds. Other functionalized alkyl phosphonate corrosion inhibitors sold by Solutia, Inc., such as alkyl-amino phosphonates, exhibit rapid decomposition in aqueous solutions containing active chlorine or active bromine oxidizers, and are not recommended by Solutia, Inc. for applications involving active halogen oxidants.

U.S. Patent No. 3,351,558 teaches the utilization of C12-C24 alkyl phosphonates and C9-C18 alkylbenzyl phosphonates as corrosion inhibitors for the protection of aluminum, German silver, and Zamac metals in alkaline detergent compositions utilized in aqueous cleaning applications, such as dishwashing. The phosphonates disclosed in U.S. Patent No. 3,351,588, however, are limited to longer chain (C12 and greater) alkyl phosphonates and are not taught for inclusion in aqueous cleaning compositions containing active halogen-based oxidizers.

U.S. Patent No. 3,630,790 teaches the utilization of alkyl and aryl phosphonates for the corrosion protection of thin metal films, notably aluminum, by pretreating the metal surface with a solution of the phosphonic acid. Alkyl phosphonates with C10 - C14 were found to be particually effective. The corrosion protection of the described phosphonates was demonstated against demetalization inhibition in boiling water, but are not taught for inclusion in aqueous cleaning compositions containing,active halogen-based oxidizers.

Saturated (random) alkyl phosphonates having about 10-24 carbon atoms are disclosed in U.S. Patent No. 4,105,573 as surfactants for alkaline dishwashing detergent compositions having a pH of 8.5 to 11 and contain a source of active chlorine bleach. The alkyl phosphonates, in combination with select fatty alcohol ethoxylate co-surfactants, are described as providing superior soil release for automatic dishwashing applications. The inclusion of alkyl phosphonate compounds in the described compositions is specifically directed towards detergency benefits, not corrosion inhibition. The '573 patent only discloses generally the inclusion of unnamed corrosion inhibitor compounds to the inventive compositions for that purpose.

U.S. Patent No. 6,767,989 teaches the use of polymeric organophosphonates (polyphosphonates) as corrosion inhibitors for both ferrous and non-ferrous metals in water treatment applications. U.S. Patent No. 6,767,989 notes such applications may include combination with other water treatment agents, such as oxidizing biocides/bleaches (chlorine, bromine, hypochlorite, hypobromite, etc.). The disclosure of U.S. Patent No. 6,767,989 is limited to polyphosphonate compounds.

U.S. Patent Nos. 6,831,054 and 6,835,706 disclose the use of organophosphonate sequestering agents in alkaline detergent compositions for water softening applications, where such compositions also provide substantial organic soil removal properties when used as aqueous cleaning compositions. Such detergent compositions may include various other cleaning ingredients, including active chlorine or active bromine bleaching agents. Various functionalized organophosphonates are disclosed in these patents.

WO-A-2005/019117 discloses a composition containing a chlorine biocide and an organo phosphide corrosion inhibitor.

### BRIEF DESCIPTION OF THE INVENTION

The invention involves effective corrosion inhibitor systems for mildly acidic to pH neutral aqueous cleaner formulations or compositions which contain as active halogen-based bleaching system comprising one or more sources of hypohalous acids or hypohalite ion in aqueous solution. A preferred bleaching system comprises a stabilized hypochlorite solution, more preferably, a mixture of N-halosulfamate oxidizing agents.

The invention involves effective corrosion inhibitor systems, including at least an alkyl phosphonate compound, for mildly acidic to pH neutral aqueous cleaner formulations or compositions wherein the corrosion inhibitor system exhibits acceptable chemical compatibility with an active halogen-based bleaching system, in particular with a stabilized hypochlorite solution, more preferably, N-clorosulfamate oxidizing agents.

The corrosion inhibitor systems are intended for use in mildly acidic to pH neutral, i.e., pH about 2 to pH about 8, cleaner solutions which contain active halogen-based oxidants, specifically active chlorine and bromine oxidants. Active chlorine/bromine-based oxidants provide a source of hypohalous acid (HOCl and/or HOBr) or hypohalite ion (OCl⁻ and/or OBr⁻) in aqueous solution. Preferred oxidants of this invention are active chlorine-based oxidants, and comprise alkali metal or alkaline earth salts of N-chlorinated sulfamic acid and/or N-chlorinated sulfamate anion. Especially preferred forms of this invention are buffered aqueous (liquid) compositions having a pH about 3 to pH about 7, which contain stabilized hypochlorite oxidants, these being mono-N-chlorosulfamate and di-N-chlorosulfamate salts as described in U.S. Patent Nos. 6,162,371 and 6,471,974, the disclosures of which are incorporated herein by reference.

The concentration of total available chlorine present in the stabilized hypochlorite solutions is about 10 to 50,000 ppm, preferably in the range of about 100 to 10,000 ppm. The term "total available chlorine" (TAC) concentration is expressed in the conventional terms of mg Cl₂ per kg of solution (ppm Cl₂).

The corrosion inhibitors are alkyl phosphonate compounds. The alkyl phosphonate compounds can be represented in neutral form by the formula R-P(O)(OH)₂, where R is a saturated alkyl group having 6 or more carbon atoms. The corresponding mono- and divalent anionic phosphonates are the preferred form, present as salts with cation(s) derived from an alkali or alkaline earth metal, or an ammonium cation. Preferably, the R group is a linear C6 to C12 saturated alkyl group. Most preferably, the R group is a linear C8 alkyl group, and the inhibitor is an alkali metal salt of octyl phosphonate or hydrogen octyl phosphonate.

More specifically, the alkyl phosphonate compounds of the invention include compounds of the following formulas:
(I)

   R-P(O)(OH)₂

   wherein R = CₙH₂ₙ₊₁ and n ≥ 6, preferably R is a linear alkyl group with n = 6-12, and most preferably n = 8;
(II) monovalent anion salts of hydrogen alkyl phosphonate:

   [R-P(O)₂(OH)]Mₓ;
(III) divalent anion salts of alkyl phosphonate:

   [R-P(O)₃]M_{y}

   wherein for salts (II) and (III) above: R is as defined above for formula (I), M = alkali metal, alkaline earth or ammonium cation, Na⁺ and K⁺ being most preferred, X = 1 for monovalent cations, X = ½ for divalent cations, and Y = 2 for monovalent cations, Y = 1 for divalent cations.

The corrosion inhibitors are extremely effective at inhibiting the corrosion of non-ferrous, easily oxidized metal surfaces commonly found in residential households, wen formulated into mildly acidic to pH neutral aqueous cleaning compositions containing alkali metal or alkaline earth salts of N-chlorinated sulfamic acid and/or N-chlorinated sulfamate anion, or mixed N-bromo-N-chloro analogs thereof. Notable metallic surfaces include aluminum, brass, and copper. The effective range of alkyl phosphonate corrosion inhibitor in the cleaning compositions is at least 0.001% by weight, with a preferred range being 0.005% to 0.1% by weight, and a most preferred range being 0.01% to 0.05% by weight.

### DETAILED DESCRIPTION OF PREFERRED EMBODIMENTS

This invention concerns corrosion inhibitor compounds which are employed in mildly acidic to pH neutral aqueous liquid cleaning compositions containing active halogen oxidizing agents. The corrosion inhibitors are alkyl phosphonate compounds, and are effective for the inhibition of metal corrosion, especially for the inhibition of "soft metal" corrosion, notably aluminum, brass, and copper which are common metal surfaces typically found in household bathtub/shower enclosures. The pH of the aqueous cleaning compositions is in the range of pH 2 to pH 8. Active chlorine-based or bromine-based oxidants are used with the inventive corrosion inhibitors to provide a source of hypohalous acid (HOCl and/or HOBr) or hypohalite ion (OCl⁻ and/or OBr⁻) in aqueous solution. Oxidizing agents of this invention are active chlorine-based oxidants, and preferably comprise alkali metal or alkaline earth salts of N-chlorinated sulfamic acid and/or N-chlorinated sulfamate anion, or mixed N-bromo-N-chloro analogs thereof. Especially preferred forms of cleaning compositions are aqueous liquid compositions buffered in a range of pH 3 to pH 7, which contain stabilized hypochlorite oxidants, these being mono-N-chlorosulfamate and di-N-chlorosulfamate salts as described in U.S. Patent Nos. 6,162,371 and 6,471,974. Preferred aqueous cleaning' compositions of this invention are so-called "surface treatment" products, where such products are applied to a surface and allowed to dry down and remain on the surface for a prolonged period (hours to days) with subsequent removal at a later time, usually by rinsing with water. Surface treatment products within the context of this invention are especially effective for the prevention of soil build-up, inhibition of mold/mildew growth/staining, and malodor prevention when used in bathtub and shower enclosures.

The corrosion inhibitors of this invention are alkyl phosphonate compounds. The alkyl phosphonate corrosion inhibitors can be represented in neutral form by the formula R-P(O)(OH)₂, where R is a saturated alkyl group having 6 or more carbon atoms. The corresponding mono- and divalent anionic phosphonates are preferred forms, present as salts with cation(s) derived from an alkali or alkaline earth metal, or an ammonium cation. Preferably, the R group is a linear C6 to C12 saturated alkyl group. Most preferably, the R group is a linear C8 alkyl group, and the corrosion inhibitor is an alkali metal salt of octyl phosphonate or hydrogen octyl phosphonate.

More particularly, the phosphonate corrosion inhibitors of this invention include compounds of the following formulas:
(I)

   R-P(O)(OH)₂

   wherein R = CₙH₂₊₁ and n ≥ 6, preferably R being a linear alkyl group, with n = 6-12, and most preferably n = 8;
(II) mono-valent anion salts of hydrogen alkyl phosphonate:

   [R-P(O)₂(OH)] Mₓ
(III) di-valent anion salts of alkyl phosphonate:

   [R-P(O)₃] M_{y}

   wherein for salts (II) and (III): R is as defined above for formula (I), M = alkali metal, alkaline earth or ammonium cation, with Na⁺ and K⁺ being most preferred, X = 1 for monovalent cations, X = ½ for divalent cations, and Y = 2 for monovalent cations, Y = 1 for divalent cations.

The corrosion inhibitors are extremely effective at inhibiting the corrosion of non-ferrous, easily oxidized metal surfaces commonly found in residential households, when mildly acidic to pH neutral aqueous composition containing these corrosion inhibitors and an active halogen-based bleaching system, such as stabilized hypochlorite oxidizing agents, are applied to metal surfaces treatable with a composition of the invention. Notable metallic surfaces include aluminum, brass, and copper. The effective range of alkyl phosphonate compound(s) of the corrosion inhibitor system in a cleaning composition is at least 0.001% by weight, more preferably in a range of 0.005% to 0.1% by weight, and most preferably in a range of 0.01% to 0.05% by weight (100 to 500 ppm).

The preferred corrosion inhibitor is n-octyl phosphonate, employed as mono- and divalent anion-containing neutralized salts, with sodium or potassium counterions. The inventive alkyl phosphonate corrosion inhibitors can be used as the sole corrosion inhibitor, or can be employed in combination with minor amounts of one or more co-inhibitors. The co-inhibitor is preferably one or more linear C8-C12 alkyl carboxylate salt. Most preferred alkyl carboxylates are alkali metal salts of capric (decanoic acid) and lauric acids (dodecanoic acid), especially the sodium or potassium salts. When present, the concentration of the alkyl, carboxylate co-inhibitor(s) ranges from 0.001% to 0.1% by weight, with 0.005% to 0.03% by weight being the preferred range.

The alkyl phosphonate corrosion inhibitors can be formulated into mildly acidic to pH neutral aqueous cleaning compositions also containing an active halogen-based bleaching system with minimal negative effect on the long-term stability of such bleaching system.

Preferred active halogen-based bleaching systems are stabilized hypochlorite solutions prepared from a source of unipositive chlorine ion (i.e., the source provides hypochlorous acid or hypochlorite ion when dissolved in water), in combination with sulfamic acid or sulfamate ion. A convenient source is an inorganic hypochlorite salt. Other convenient sources of unipositive chlorine ions include, for example, aqueous solutions of chlorine gas, and N-chloro compounds. The inorganic hypochlorite salts useful in the present invention include, for example, potassium hypochlorite, sodium hypochlorite, lithium hypochlorite and calcium hypochlorite. Examples of N-chloro compounds include 1,3-dichloro-5,5-dimethylhydantoin, N-chlorosuccinimide, and N-chloro-N-sodiobenzene-sulfonamidate. Generally, the hypochlorite source is utilized in an amount between 0.001% to 5% by weight of the composition, preferably between 0.01% to 1% by weight of the composition.

The stabilized hypochlorite solutions of this invention contain combinations of HClNSO₃⁻ (mono-N-chlorosulfamate) and Cl₂NSO₃⁻ (di-N-chlorosulfamate), herein referred to as "stabilized hypochlorite", which are derived from the chemical combination of a source of sulfamate (i.e, sulfamic acid or a sulfamate-containing salt) and a source of unipositive chlorine. The stabilized hypochlorite compositions of this invention can be chemically described as being derived from a sulfamate to hypochlorite mole ratio of at least 0.5:1.0 (for example, 0.75 mole of sulfamate to 1 mole of total hypochlorite). Preferably, the mole ratio of sulfamate to hypochlorite is between 0.5:1 and 5:1; more preferably, this mole ratio is between 0.7:1 and 3:1; most preferably, this mole ratio is between 1:1 and 2:1.

The pH of the aqueous cleaning compositions of this invention are pH 2 to pH 8, preferably in the range of pH 3 to pH 7, and most preferably in the range of pH 3 to pH 6.

The cleaning compositions of the invention are best practiced in the form of a buffered aqueous solution. These solutions should be buffered with a suitable, inert buffer. A preferable, inert buffering system is an acidic system, comprising a weak acid (acid dissociation constant, pKₐ, from 2 to 7) and its conjugate base, :and capable of stabilizing the pH in a range of from 2 to 6.5. Examples of suitable buffers include those derived from citric acid, succinic acid, glutaric acid, adipic acid, acetic acid, propanoic acid, polyacrylic acid, phosphoric acid, boric acid, copolymers of maleic acid with vinyl ethers, copolymers of acrylic acid with maleic acid, and copolymers of acrylic acid with vinyl ethers. By buffers "derived" from an acid, it is meant that the buffer is prepared by combining that acid with its conjugate base to form a homogenous system. Preferred buffer systems are those based on citric acid and polyacrylic acid. The buffer system is present in an amount ranging from 0.05% to 5% by weight of the composition, preferably from 0.1% to 1% by weight of the composition. Buffers that are inherently unstable to oxidation, such as those derived from lactic acid and malic acid, which have a secondary hydroxyl group making them highly susceptible to oxidation by an active chlorine source, should not be used.

Cleaning compositions of this invention contain water as the solvent due to its low cost and environmental and safety benefits. However, if desired, other oxidation-resistant solvents may be admixed therewith. Such exemplary solvents include tertiary alcohols, e.g., tert-butyl alcohol and tert-amyl alcohol, as well as various glymes and polyglymes (e.g., dialkyl ethers of ethylene glycol, diethylene glycol, propylene glycol, and dipropylene glycol), which can enhance the cleaning of oil-borne stains.

The compositions or solutions of this invention may also contain other ingredients such as surfactants, chelating agents, surface-modifying polymers, hydrotroping agents, fragrances, bromide ion containing salts, sources of hypobromite, and thickeners. Many of the buffers noted earlier can also be used as chelating agents (e.g., citrate or acrylate).

Surfactant(s) may be included in the compositions to enhance the cleaning and/or foaming properties of the composition. Such surfactants include, but are not limited to, anionic sulfonated or sulfated surfactants, for example, linear alkyl benzene sulfonates, alkyl sulfates, alkyl sulfonates, alcohol ether sulfates, and the like. Preferred surfactants are sodium lauryl sulfate, sodium dodecylben-zenesulfonate, secondary alkyl sulfonates, sodium lauryl ether sulfates, alcohol ethoxy carboxylates and alkyl diphenyl oxide disulfonates. Other surfactants that may be present, but are less preferred, are ethoxylated nonionic surfactants, amine oxides, e.g., lauryl dimethyl amine oxide, N-alkyl pyrrolidones, sulfosuccinates, alkyl betaines, alkyl sulfobetaines, and tetraalkyl quaternary ammonium surfactants. The amount of surfactant utilized in the inventive composition is determined by the surfactant cleaning properties desired as well as the particular application for which the composition is formulated. Generally, the surfactant is present in an amount between 0.05% to 5% by weight of the composition, preferably between 0.1% to 2% by weight of the composition.

Hydrotroping agents which may be present in the cleaning composition include alkylated aryl sulfonates, alkylated diphenyl oxide disulfonates, short chain alkyl sulfates, and short chain alkyl sulfonates. Representative hydrotroping agents include alkali metal salts of toluene sulfonate, xylene sulfonate, cumene sulfonate, 2-ethyl-hexyl sulfate, and n-octyl sulfonate. Generally, the hydrotroping agent is present in an amount between from 0% to 5% by weight of the composition, preferably between 0.1% and 2% by weight of the composition.

The antimicrobial properties of the cleaning compositions can be markedly enhanced by the addition of certain organic dopants (a.k.a. doping agents or enhancing agents), as described in detail in U.S. Patent No. 6,471,974, which patent is incorporated herein by reference. Highly effective antimicrobial enhancing dopants include dialkyl hydantoins (preferably 5,5-dialkyl hydantoins), arylsulfonamides, and succinimides. Examples of 5,5-dialkyl hydantoins include 5,5-dimethylhydantoin, 5-ethyl-5-methylhydantoin and 5,5-diethylhydantoin. Examples of aryl sulfonamides include benzene sulfonamide, toluene sulfonamide, 4-carboxybenzensulfonamide, and a substituted derivative of any one of these compounds. Various other substituted derivatives of the parent compounds mentioned above should be effective enhancing agents as well (for example, 4-ethylbenzenesulfonamide). Less effective,dopants include glycolurils. Preferably, the mole ratio of dopant to hypochlorite is at least 1:25, (for example, 1 mole of benzenesulfonamide to 25 moles of total hypochlorite). Most preferably, the mole ratio of dopant to hypochlorite is at least 1:10 (for example, 1 mole of dimethylhydantoin to 10 moles of total hypochlorite).

A source of unipositive bromine ion is optionally added to the composition of this invention to further enhance bleaching and microbial control performance. Sources of unipositive bromine ion are defined as those compounds which when added to aqueous N-chlorosulfamate solutions of this invention, function as a source of hypobromous acid or hypobromite ion. Elemental bromine, or a bromide or bromate salt of lithium, sodium, potassium, calcium, magnesium, or zinc, in combination with the source of unipositive chlorine ion may serve as a source of unipositive bromine ion. Inorganic hypobromite salts, such as NaOBr, also can be added directly. Stabilized hypobromite compounds such as brominated hydantoins, succinimides, arene sulfonamides, isocyanuric acids, and glycolurils may also be employed as the source of hypobromite. Examples include N-bromo-succinimide, 1,3-dibromo-5,5-dimethylhydantoin, and N-bromo-N-sodio-benzene sulfonamidate. The source of unipositive bromine ion may be present in amounts ranging from 0.001% to 2%, preferably from 0.01% to 0.1%.

The cleaning compositions may also contain thickening agents to enhance the viscosity of the compositions. Increasing the viscosity of the compositions can improve their optimal use on vertical surfaces. Such thickened compositions generally have a viscosity in a range of from about 10 centipoise to about 3500 centipoise at about room temperature, preferably about 50 centipoise to about 2500 centipoise, and most preferably about 100 centipoise to 1000 centipoise. Exemplary thickening'agents include surfactants such as alkyl ether sulfates, oxidation resistant polymers such as acrylate resins (e.g., Carbopol® 672 or 676, B.F. Goodrich Specialty Chemicals, Cleveland, Ohio), or clays (e.g., Laponite®, Southern Clay Products, Inc., Gonzales, Tex.).

EXAMPLES: The following examples are provided to illustrate the effectiveness of the inventive alkyl phosphonate corrosion inhibitors in formulation, with respect to corrosion inhibition of aluminum, brass, and copper metal surfaces.

Composition 1: Base bathtub/shower cleaner formula without corrosion inhibitor (ingredients expressed as weight %):
0.50% Na₃Citrate·2H₂O
0.195% Sulfamic Acid
2.22% Hydrotrope surfactant solution (45% actives.)
0.94% Anionic surfactant solution (45% actives)
0.22% Sodium polyacrylate solution (45% actives)
0.13% 1,3-Dichloro-5,5-dimethylhydantoin
0.10% Non-ionic surfactant
pH = 5.2
Active chlorine content = 0.098% expressed as weight % NaOCl (about 930 ppm total available chlorine (TAC)).

### Composition 2: Solution containing monosodium and disodium n-octyl phosphonate:

53.6 g of solid NaOH (1.34 mole) is slowly added with stirring to 746.6 g of deionized water and completely, dissolved. 199.8 g of n-octyl phosphonic acid is slowly added to the resulting NaOH solution and stirred for several hours until completely dissolved. The resulting pale yellow solution is filtered to remove extraneous particulates. The resulting finished intermediate solution contains 15.6% by weight monosodium octyl phosphonate and 7.4% by weight disodium octyl phosphonate and has a pH 7.6. This solution contains 20.0% octyl phosphonic acid (OPA), present in the form of the derivative water-soluble mono- and di-sodium salts.

### Example 1: Evaluation of corrosion inhibition effects using samples of brass and aluminum coupons and copper plumbing pipe.

(i) Aluminum (Al) coupons: 1.5 X 2.5 inch coupons, 0.025 gauge, smooth surface, shiny metallic aluminum color.
(ii) Brass coupons: 1.5 X 2.5 inch coupons, 0.025 gauge, smooth surface, shiny metallic brass color.
(iii) Copper (Cu) plumbing pipe: 1 inch length, 0.5 inch diameter copper pipe sections, smooth surface, shiny metallic copper color.

Compositions evaluated for corrosion effects against the above metal substrates were prepared using the following:

### Control solution

Base shower cleaner formula without corrosion inhibitor of Composition 1 above.

### Inhibitor additives

20.0% octyl phosphonic acid (OPA) solution as mono- and di-sodium salts as in Composition 2 above;
10.0% potassium laurate (KLaurate) solution; and 10.0% sodium caprate (NaCaprate) solution.

Each above inhibitor additive added to control solution, expressed as weight % active added to control.

Procedure: Metal samples were placed in individual 125 mL glass jars, to which 50.0 g (+/- 0.2 g) of test solution was added to each jar. Brass and aluminum coupons are only partially submerged in test liquids, whereas the Cu pipe sections were fully submerged. The jars were sealed with plastic lids and shaken to fully coat substrate with liquid. Jars were stored at room temperature for 14 days in the dark, at which time samples were removed from the jars, thoroughly rinsed with a flowing stream of warm tap water, and allowed to air dry. Once dry, the previously submerged sections of the metal samples were visually evaluated for signs of discoloration, hazing, pitting, surface deposits, or similar indications of corrosion.

**Table 1: Corrosion test results**

| **Inhibitor Added to Control** | **Al Coupon Appearance** | **Brass Coupon Appearance** | **Cu Pipe Appearance** |
|---|---|---|---|
| Control - None | White hazy tarnish over entire submerged surface, with severe dark gray pitting | Hazy yellow tarnish over entire submerged surface | Hazy, etched over entire surface |
| 0.020% OPA | Shiny smooth surface, no tarnish, very slight gray pitting | Shiny smooth surface, very slight lightening of submerged coupon surface color | Shiny surface, no change from initial appearance |
| 0.020% OPA + 0.020% KLaurate | Shiny smooth surface, no tarnish, no change from initial appearance, | Shiny smooth surface, very slight lightening of submerged coupon surface color | Shiny surface, no change from initial appearance |
| 0.020% OPA + 0.020% NaCaprate | Shiny smooth surface, no tarnish, no change from initial appearance | Shiny smooth surface, very slight lightening of submerged coupon surface color | Shiny surface, no change from initial appearance |

Octyl phosphonate is a highly effective corrosion inhibitor for aluminum, brass and copper metallic substrates. The addition of a minor amount of laurate or caprate carboxylate salt appears to enhance the protective effects on aluminum metal substrate.

The following alternative phosphate and phosphonate compounds, evaluated in a similar manner, using aluminum and brass coupons gave unsatisfactory results, similar to the Control solution (the submerged section of treated coupons developed a hazy tarnish, and in the case of aluminum coupons, moderate to severe pitting was observed):

### Unsatisfactory inhibitors

(1) Mono/disodium phosphate ;
(2) Phenyl phosphonic acid (as sodium salt);
(3) Butyl phosphonic acid (as sodium salt);
(4) 2-phosphonobutane-1,2,4-tricarboxylic acid (DEQUEST® 7000, Solutia, Inc.)*;
(5) Bis(2-ethylhexyl)phosphoric acid ester*; and
(6) 1-hydroxyethylidene-1,1-phosphonic acid (DEQUEST® 2010, Solutia, Inc.)*
   * = Commercially available corrosion inhibitor compound.

Thus, the highly effective performance achieved with inventive alkyl phosphonate corrosion inhibitor compounds is both unexpected and unique, relative to the much less effective performance observed using other phosphate and phosphonate corrosion inhibitor compounds.

As will be apparent to one skilled in the art, various modifications can be made within the scope of the aforesaid description. Such modifications being within the ability of one skilled in the art form a part of the present invention and are embraced by the appended claims.

## Claims

1. A cleaning composition with corrosion inhibiting effect on application to a metal surface, the composition comprising
(a) at least 0.001% by weight of a corrosion inhibitor system comprising at least an alkyl phosphonate compound of formula (I) as follows: R-P(O)(OH)₂ wherein R = CₐH₂ₙ₊₁ and n ≥ 6, and salts thereof;
(b) 0.001% to 5% by weight of an active halogen-based bleaching system comprising one or more sources of hypohalous acid or hypohalite ion in aqueous solution; and
(c) an aqueous solution;
wherein said composition has a ph in a range of 2 to 8.

2. The cleaning composition of claim 1, wherein the alkyl phosphonate compound comprises at least one compound represented by formula 1, formula II and/or formula III, wherein formula II and formula III are as follows:
(II) [ R-P(O)₂(OH)] Mₓ,
(III) [R-P(O)₃)M_{y}
wherein for formulas (II) and (III) above: R is as defined for formula (I), M = alkali metal, alkaline earth or ammonium cation, X = 1 for monovalent cations, X = ½ for divalent cations, and Y = 2 for monovalent cations, Y = 1 for divalent cations.

3. The cleaning composition of claim 2, wherein R is a linear alkyl group and n = 6-12.

4. The cleaning composition of claim 1, wherein the alkyl phosphonate compound is octyl phosphonic acid or salt thereof.

5. The cleaning composition of claim 1, wherein the corrosion inhibitor is present in an amount of 0.005% to 0.1% by weight.

6. The cleaning composition of claim 1, wherein the bleaching system comprises a stabilized hypochlorite solution.

7. The cleaning composition of claim 1, wherein the bleaching system comprises a mixture of mono-N-chlorosulfamate and di-N-chlorosulfamate compounds.

8. The cleaning composition of claim 1, wherein the bleaching system comprises a mixture of mono-N-chlorosulfamate and di-N-chlorosulfamate compounds which are derived from a source of sulfamate and a source of hypochlorite, and has a mole ratio of sulfamate to hypochlorite of at least 0.5:1.

9. The cleaning composition of claim 1, wherein the bleaching system is present in an amount of 0.01% to 1% by weight.

10. The cleaning composition of claim 1, wherein said corrosion inhibitor system further comprises 0.005% to 0.03% by weight of a linear C₈-C₁₂ carboxylate salt.

11. The cleaning composition of claim 10, wherein said carboxylate salt is selected from alkali metal caprate salts and alkali metal laurate salts.

12. The cleaning composition of claim 1, wherein said corrosion inhibiting effect is provided upon application of said composition to aluminum, brass or copper.

## Patentansprüche

1. Eine Reinigungszusammensetzung mit korrosionsinhibierender Wirkung nach Anwendung auf einer Metalloberfläche, wobei die Zusammensetzung umfasst
(a) mindestens 0,001 Gew.-% eines Korrosionsinhibitorsystems umfassend mindestens ein Alkyl-Phosphonat der Formel (I) wie folgt: R-P (O) (OH)₂, worin R = CₙH₂ₙ₊₁ und n >= 6 ist, und deren Salze;
(b) 0,001% bis 5 Gew.-% eines aktiven halogenhaltigen Bleichsystems umfassend ein oder mehrere Quellen einer Hypohalogensäure oder von Hypohalogenit-Ionen in wässriger Lösung; und
(c) eine wässrige Lösung;
worin besagte Zusammensetzung einen pH-Wert im Bereich von 2 bis 8 aufweist.

2. Die Reinigungszusammensetzung nach Anspruch 1, worin die Alkyl-Phosphonat-Verbindung mindestens eine Verbindung der Formel I, Formel II und / oder Formel III umfasst, worin Formel II und Formel III sind:
(II) [R-P(O)₂(OH)] Mₓ,
(III) [R-P(O)₃] M_{y}
worin für die Formeln (II) und (III) oben:
R wie in Formel (I) definiert ist, M = Alkalimetall-, Erdalkalimetall- oder Ammoniumkation, X=1 für einwertige Kationen, X=1 / 2 für zweiwertige Kationen und Y=2 für einwertige Kationen, und Y=1 für zweiwertige Kationen ist.

3. Die Reinigungszusammensetzung nach Anspruch 2, worin R eine lineare Alkylgruppe ist und n = 6-12.

4. Die Reinigungszusammensetzung nach Anspruch 1, worin die Alkyl-Phosphonatverbindung Octylphosphonsäure oder ein Salz davon ist.

5. Die Reinigungszusammensetzung nach Anspruch 1, worin der Korrosionsinhibitor in einer Menge von 0,005% bis 0,1 Gew.-% enthalten ist.

6. Die Reinigungszusammensetzung nach Anspruch 1, worin das Bleichsystem eine stabilisierte Hypochlorit-Lösung umfasst.

7. Die Reinigungszusammensetzung nach Anspruch 1, worin das Bleichsystem ein Gemisch von mono-N-Chlorsulfamat- und di-N-Chlorsulfamat-Verbindungen umfasst.

8. Die Reinigungszusammensetzung nach Anspruch 1, worin das Bleichsystem eine Mischung von mono-N-Chlorsulfamat- und di-N-Chlorsulfamat-Verbindungen umfasst, die aus einer Sulfamat-Quelle und einer Hypochlorit-Quelle stammen und ein Molverhältnis von Sulfamat zu Hypochlorit von mindestens 0,5:1 aufweisen.

9. Die Reinigungszusammensetzung nach Anspruch 1, worin das Bleichsystem in einer Menge von 0,01% bis 1 Gew.-% vorhanden ist.

10. Die Reinigungszusammensetzung nach Anspruch 1, worin besagtes Korrosionsinhibitorsystem ferner 0,005% bis 0,03 Gew.-% eines linearen C₈-C₁₂ Carbonsäuresalzes umfasst.

11. Die Reinigungszusammensetzung nach Anspruch 10, worin das Carbonsäuresalz ausgewählt ist aus Alkalimetallcaprat-Salzen und Alkalimetalllaurat-Salzen.

12. Die Reinigungszusammensetzung nach Anspruch 1, worin die korrosionshemmende Wirkung nach Anwendung der besagten Zusammensetzung auf Aluminium, Messing oder Kupfer erfolgt.

## Revendications

1. Composition de nettoyage présentant un effet d'inhibition de la corrosion à la suite d'une application sur une surface métallique, la composition comprenant
(a) au moins 0,001 % en poids d'un système inhibiteur de corrosion comprenant au moins un composé alkylphosphonate de formule (I) suivante : R-P(O)(OH)₂ dans laquelle R = CₙH₂ₙ₊₁ et n ≥ 6, et les sels de celui-ci ;
(b) 0,001 % à 5 % en poids d'un système de blanchiment à base d'un halogène actif comprenant une ou plusieurs sources d'acide hypohalogéneux ou d'ion hypohalogénite dans une solution aqueuse ; et
(c) une solution aqueuse ;
dans laquelle ladite composition a un pH dans la plage de 2 à 8.

2. Composition de nettoyage selon la revendication 1, dans laquelle le composé alkylphosphonate comprend au moins un composé représenté par la formule I, par la formule II et/ou par la formule III, dans laquelle la formule II et la formule III sont les suivantes :
(II) [R-P(O)₂(OH)] Mₓ,
(III) [R-P(O)₃] M_{y}
dans laquelle pour les formules (II) et (III) ci-dessus : R est tel que défini pour la formule (I), M = cation de métal alcalin, de métal alcalino-terreux ou d'ammonium, X = 1 pour les cations monovalents, X = 1/2 pour les cations divalents et Y = 2 pour les cations monovalents, Y = 1 pour les cations divalents.

3. Composition de nettoyage selon la revendication 2, dans laquelle R est un groupe alkyle linéaire et n = 6 à 12.

4. Composition de nettoyage selon la revendication 1, dans laquelle le composé alkylphosphonate est l'acide octylphosphonique ou un sel de celui-ci.

5. Composition de nettoyage selon la revendication 1, dans laquelle l'inhibiteur de corrosion est présent en une quantité de 0,005 % à 0,1 % en poids.

6. Composition de nettoyage selon la revendication 1, dans laquelle le système de blanchiment comprend une solution d'hypochlorite stabilisée.

7. Composition de nettoyage selon la revendication 1, dans laquelle le système de blanchiment comprend un mélange de composés mono-N-chlorosulfamate et di-N-chlorosulfamate.

8. Composition de nettoyage selon la revendication 1, dans laquelle le système de blanchiment comprend un mélange de composés mono-N-chlorosulfamate et di-N-chlorosulfamate qui dérivent d'une source de sulfamate et d'une source d'hypochlorite, et a un rapport molaire du sulfamate à l'hypochlorite d'au moins 0,5:1.

9. Composition de nettoyage selon la revendication 1, dans laquelle le système de blanchiment est présent en une quantité de 0,01 % à 1 % en poids.

10. Composition de nettoyage selon la revendication 1, dans laquelle ledit système inhibiteur de corrosion comprend en outre 0,005 % à 0,03 % en poids d'un sel carboxylate linéaire en C₈-C₁₂.

11. Composition de nettoyage selon la revendication 10, dans laquelle ledit sel carboxylate est choisi parmi les sels caprate de métal alcalin et les sels laurate de métal alcalin.

12. Composition de nettoyage selon la revendication 1, dans laquelle ledit effet d'inhibition de la corrosion est fourni à la suite de l'application de ladite composition sur de l'aluminium, du laiton ou du cuivre.
